# EUROPEAN PATENT APPLICATION

(11) **EP 3 636 717 A1**
(43) Date of publication of application: **15.04.2020**
(21) Application number: 18813919.0
(22) Date of filing: 31.05.2018
(51) Int. Cl.: C09D 4/06, C09D 133/08, C09D 7/40

(54) **UV-CURABLE PAINT COMPOSITION**

(30) Priority: 08.06.2017 KR 20170071544
(71) Applicant: KCC Corporation, Seoul 06608 (KR)
(72) Inventor: KIM, Kang Soo, Yongin-si Gyeonggi-do 16902 (KR); PARK, Kyu Yeob, Yongin-si Gyeonggi-do 17079 (KR); RYU, Suk Hwa, Yongin-si Gyeonggi-do 16874 (KR); CHO, Chang Hyun, Yongin-si Gyeonggi-do 16964 (KR)
(74) Representative: Patentwerk B.V.
(86) International application number: PCT/KR2018/006216
(87) International publication number: WO 2018/225978

(57) **Abstract**

The present invention provides a solvent-free UV curable coating composition, which is environmentally friendly and can exhibit good properties by using acrylate monomers having 2 or less functional groups in a predetermined amount ratio.

## Description

### [Technical Field]

The present invention relates to a solvent-free UV curable coating composition, and an automotive headlamp reflector using the same.

### [Background]

An automotive headlamp (headlight) illuminates a front area for safe driving of an automobile at night. A reflector employed to the headlamp, conventionally made of a metal, is being replaced by a reflector made of a synthetic resin. The reflector is generally constructed by forming a molded product of a bulk molding compound (BMC) through injection-molding, the BMC including a glass fiber, a weight balancing material, a low shrinkage material and a release agent added to an unsaturated polyester resin, and forming a reflector surface by depositing aluminum on a surface of the BMC molded product.

As presently commercialized vacuum-deposited UV curable coatings for an automotive headlamp, there are solvent-containing vacuum-deposited coatings for an air spay process, and vacuum-deposited coatings for a flow coating process. Since the solvent-containing vacuum-deposited coatings are easily handled and are not greatly influenced by the surface state or shape of the injection-molded article, headlamp market shares are dominated by the solvent-containing vacuum-deposited coatings. In case of using the solvent-containing coatings, however, in order to meet volatile organic compounds (VOC) regulations, a regenerative thermal oxidizer (RTO) for eliminating VOC needs to be installed and operated and there will be greater demands for the fuel and filter costs required for the RTO. In addition, a drying process for solvent volatilization should be essentially performed, undesirably lowering the manufacturability.

The coatings for the flow coating process have been developed as a substitute for the coatings for the spray coating process using volatile organic solvents. Since the coatings for the flow coating process are coated in form of a thin film, a coating defect is likely to be generated according to the surface state of the coating. In a case where the coating is complexly shaped, uncoating and/or pooling of coating may easily occur to the coating surface. In addition, the coatings for the flow coating process using a single solvent may still continuously produce the VOC even if used in a reduced amount, compared to the coating for the spray process.

### [Disclosure of the Invention]

### [Problems to be Solved]

The present invention provides a solvent-free UV curable coating composition, which is environmentally friendly and can exhibit good adhesion at a high temperature by using acrylate monomers having 2 or less functional groups as ingredients in a predetermined amount ratio.

The present invention also provides a lens or a reflector for an automotive headlamp comprising a cured coating layer made from the solvent-free UV curable coating composition.

### [Means to Solve the Problems]

The present invention provides a solvent-free UV curable coating composition comprising 10 to 20 parts by weight of urethane (meth)acrylate oligomer having 4 or more functional groups; 35 to 55 parts by weight of (meth)acrylate monomer having 3 or more functional groups; 15 to 25 parts by weight of monofunctional (meth)acrylate monomer having hydroxyl groups; 10 to 20 parts by weight of alicyclic (meth)acrylate monomer having 2 or less functional groups; and 5 to 10 parts by weight of a photopolymerization initiator, based on 100 parts by weight of the composition.

Further, the present invention provides a headlamp comprising a substrate; and a cured coating layer located on one or both surfaces of the substrate and made from the UV curable coating composition.

### [Effects of the Invention]

The present invention provides a solvent-free UV curable coating composition, which can be employed to a conventional air spray coating process as it is, thereby increasing the manufacturability. In addition, the solvent-free UV curable coating composition according to the present invention can demonstrate substantially the same coating properties as the conventional coating using a solvent, in terms of high-temperature adhesion, appearance characteristics, initial adhesion, heat resistance, moisture resistance and heat-cold resistance.

In addition, since volatile organic solvents are not used in the solvent-free UV curable coating composition according to the present invention, problems of harmful effects and environmental contamination, caused due to the use of the volatile organic solvents, can be solved. In addition, since demand for manufacturing equipments and processes required for solvent volatilization is eliminated, the manufacturability and economic efficiency can be increased.

Moreover, the solvent-free UV curable coating composition according to the present invention can satisfy not only the domestic VOC-related environmental restrictions governed by the Ministry of Environment of Korea but also international environmental restrictions of foreign countries including China, India, and so on, which are becoming stricter. In addition, the solvent-free UV curable coating composition according to the present invention can minimize the costs associated with use and management of existing environmental equipments.

### [Detailed Description to Execute the Invention]

Hereinafter, the present invention will be described in detail. However, the present description is not intended to limit the invention to the following content, and when necessary, various components can be modified in various manners or can be optionally used together with each other. Therefore, it will be understood that the present invention is intended to cover all modifications, equivalents and alternatives, which may be included within the spirit and scope of the invention.

As used in this specification, the term "(meth)acrylate" refers to acrylate or methacrylate.

In addition, as used in this specification, the term "monomer" differs from an oligomer or a polymer and refers to a compound having a weight average molecular weight of less than 1,000 g/mol. As used in this specification, the term "polymerizable functional group" refers to a functional group involving in a polymerization reaction, e.g., a (meth)acrylate group.

The conventional UV curable coating composition for an automotive headlamp has a relatively high viscosity. Therefore, before coating the composition on various kinds of plastic materials, the viscosity of the composition needs to be adjusted to enable spray coating. For this, the composition is diluted using volatile organic compound (VOC) solvents as a diluent. In this regard, however, the solvents used as the diluent are harmful to human body and creates environmental contamination. Further, since additional manufacturing equipments and processes for solvent volatilization are required, the manufacturability and economic efficiency may be lowered.

Meanwhile, there have been developed solvent-free UV coatings just for a surface protecting purpose, but the coatings have never been used for a headlamp. Practically, the solvent-free UV coatings have quite a high viscosity, resulting in poor workability for spray coating and degradation in smoothness of coating. In addition, the solvent-free UV coatings are not suitable to be applied to a plastic molded article having a complex shape not a plane shape. If the solvent-free UV coatings are used as a material for a headlamp, several problems including a poor light distribution due to degraded smoothness of coating, delamination of heat-resistant coating due to a curing failure occurring around an overcoated portion, or a rainbow phenomenon occurring due to surface wrinkles, may arise, making it difficult to apply the solvent-free UV coatings to an actual product.

The present invention aims to develop a UV curable coating composition, which can minimize environmental influences so as not to be against environmental regulations on the use of coatings by minimizing the VOC content while enabling conventional spray coating.

To this end, the present invention provides a solvent-free UV curable coating composition comprises a urethane (meth)acrylate oligomer having 4 or more functional groups, a (meth)acrylate monomer having 3 or more functional groups, a low-viscosity monofunctional (meth)acrylate monomer or a (meth)acrylate monomer having 2 or more functional groups and a photopolymerization initiator, wherein amounts of these materials are adjusted to be in particular ranges.

### <Solvent-free UV curable coating composition>.

The solvent-free UV curable coating composition according to the present invention is a photocurable composition comprising a photocurable oligomer, a photocurable monomer and a photopolymerization initiator. Here, a urethane (meth)acrylate oligomer having 4 or more functional groups is used as the photocurable oligomer, and 3 or more (meth)acrylate monomers comprising a monofunctional (meth)acrylate monomer, a (meth)acrylate monomer having 2 or more functional groups and a (meth)acrylate monomer having 3 or more functional groups are used as the photocurable monomer. When necessary, the solvent-free UV curable coating composition according to the present invention may further comprise commonly used additives, including an adhesion promoter, a leveling agent, and so on.

Hereinafter, the solvent-free UV curable coating composition will be described in detail.

### Urethane (meth)acrylate oligomer having 4 or more functional groups

In the solvent-free UV curable coating composition according to the present invention, the urethane acrylate oligomer having 4 or more functional groups is a main component for forming a coating, and functions to exhibit mechanical strength of the coating and high-temperature durability by controlling the overall crosslinking density of the coating.

The urethane (meth)acrylate oligomer having 4 or more functional groups may have 4 or more polymerizable unsaturated functional groups (4 to 15 as an example), for example, 6 or more polymerizable unsaturated functional groups (6 to 15 as an example). If the number of polymerizable functional groups in a molecule of the urethane (meth)acrylate oligomer is less than 4, after curing, the coating may have poor appearance and the heat resistance and strength of the coating may be lowered.

An urethane (meth)acrylate oligomer having 4 or more functional groups generally known in the related art can be used, and the examples may include a reaction product of an aliphatic isocyanate having 2 functional groups (for example, hexamethylene diisocyanate, dicyclohexylmethane diisocyanate, or isophorone diisocyanate) and a hydroxy (meth)acrylate monomer having 3 or more polymerizable unsaturated functional groups per molecule (pentaerytritol tri(meth)acrylate, or dipentaerytritol tri(meth)acrylate as an example).

The urethane (meth)acrylate oligomer having 4 or more functional groups may have a viscosity of 2,500 cps or less, and 2,200 cps or less as another example, at 25°C. In addition, the urethane (meth)acrylate oligomer having 4 or more functional groups may have a weight-average molecular weight (Mw) in the range of 1,000 to 2,500 g/mol, and 1,000 to 2,000 g/mol as another example. When the viscosity and weight-average molecular weight (Mw) of the urethane (meth)acrylate oligomer having 4 or more functional groups fall under the ranges stated above, the coating may exhibit excellent reactivity and heat resistance, and good physical properties including workability and moisture resistance.

The amount of the urethane (meth)acrylate oligomer having 4 or more functional groups used is not particularly limited, but may be, for example, in the range of 10 parts to 20 parts by weight, based on 100 parts by weight of the solvent-free UV curable coating composition. When the amount of the urethane (meth)acrylate oligomer having 4 or more functional groups falls under the range stated above, the coating may exhibit high strength, heat resistance and improved adhesion to anther substrate.

### (Meth)acrvlate monomer having 3 or more functional groups

In the solvent-free UV curable coating composition according to the present invention, the (meth)acrylate monomer having 3 or more functional groups functions as a crosslinking agent for controlling an interpolymer crosslinking density and may supplement various curing properties of the coating, including hardness, adhesion, or appearance characteristics.

The (meth)acrylate monomer having 3 or more functional groups may have 3 or more polymerizable functional groups per molecule, 3 to 10 polymerizable functional groups as an example, and 4 to 8 polymerizable functional groups as another example.

The (meth)acrylate monomer having 3 or more functional groups may have a viscosity of 2,000 cps or less, and 50 to 1,800 cps as another example, at 25°C.

Non-limiting examples of the (meth)acrylate monomer having 3 or more functional groups may include trimethylolpropane tri(meth)acrylate (TMPTA), pentaerythritol tri(meth)acrylate (PETA), trimethylolpropane ethoxylated tri(meth)acrylate, ditrimethylolpropane tetra(meth)acrylate (DTMPTTA), dipentaerylthritol penta(meth)acrylate (DPPA), dipentaerythritol hexa(meth)acrylate (DPHA) or a combination thereof. As an example, trimethylolpropane triacrylate (TMPTA), pentaerythritol triacrylate (PETA) or a combination thereof may be used.

The amount of the (meth)acrylate monomer having 3 or more functional groups is not particularly limited, but may be in the range of 35 parts to 55 parts by weight as an example, and 35 parts to 45 parts by weight as another example, based on 100 parts by weight of the solvent-free UV curable coating composition. When the amount of the (meth)acrylate monomer having 3 or more functional groups falls under the range stated above, the coating may have improved high-temperature adhesive force and may exhibit high strength, heat resistance, good appearance and improved adhesion to anther substrate.

### Monofunctional (meth)acrylate monomer having a hydroxyl group

In the solvent-free UV curable coating composition according to the present invention, the monofunctional (meth)acrylate monomer having a hydroxyl group, which is used as a reactive diluent of the photoreactive polymer, may provide flowability and workability by controlling the viscosity of the resin composition, and may supplement various curing properties of the coating, including curing speed, adhesion, flexibility, appearance characteristics, or hardness.

A known (meth)acrylate monomer, having a hydroxyl group and a polymerizable functional group in molecule, may be used without limitation. The monofunctional (meth)acrylate monomer having a hydroxyl group may function as a diluent for maintaining a low viscosity of the composition.

The monofunctional (meth)acrylate monomer having a hydroxyl group may have a viscosity of 30 cps or less, and 7 to 10 cps as another example, at 25°C. When the viscosity is within the range stated above, the coating may exhibit good properties including workability and moisture resistance by controlling the flowability of the coating.

Non-limiting examples of the monofunctional (meth)acrylate monomer having a hydroxyl group may include hydroxyethyl (meth)acrylate, hydroxypropyl (meth)acrylate, hydroxybutyl (meth)acrylate, hydroxypentyl (meth)acrylate or a combination thereof. As an example, hydroxyethyl methacrylate (HEMA) may be used.

The amount of the monofunctional (meth)acrylate monomer having a hydroxyl group is not particularly limited, but may be in the range of 15 parts to 25 parts by weight, based on 100 parts by weight of the solvent-free UV curable coating composition. When the amount of the monofunctional (meth)acrylate monomer having a hydroxyl group falls under the range stated above, adhesion and flexibility of the coating may be promoted, and the coating may exhibit improved high-temperature adhesive force, high strength, heat resistance and good appearance.

### Alicyclic (meth)acrylate monomer having 2 or less functional groups

In the solvent-free UV curable coating composition according to the present invention, alicyclic acrylate monomer having 2 or less functional groups, which is used as a reactive diluent of the photoreactive polymer, may provide workability by controlling the viscosity of the resin composition, and may supplement various curing properties of the coating, including curing speed, adhesion, appearance characteristics, or hardness.

A known (meth)acrylate monomer, having 2 or less (1 or 2 as an example) polymerizable functional groups and an alicyclic functional group in molecule, may be used as the alicyclic (meth)acrylate monomer without limitation. The alicyclic (meth)acrylate monomer exhibits a good diluting capability by its low viscosity and has a suitably low shrinkage after curing.

The alicyclic (meth)acrylate monomer having 2 or less functional groups may have a viscosity of 150 cps or less, and 140 cps or less as another example, at 25°C.

When the viscosity is within the range stated above, the coating composition may be easy to be handled by controlling the flowability of the coating and the coating may exhibit good properties including workability and moisture resistance.

Non-limiting examples of the alicyclic (meth)acrylate monomer may include tricyclodecanedimethanol di(meth)acrylate, cyclohexyl (meth)acrylate, cyclohexyl di(meth)acrylate, norbonyl (meth)acrylate, norbonyl di(meth)acrylate or a combination thereof. As an example, tricyclodecanedimethanol diacrylate(TCDDA) may be used.

The amount of the alicyclic (meth)acrylate monomer having 2 or less functional groups is not particularly limited, but may be in the range of 10 parts to 20 parts by weight as an example, and 10 parts to 15 parts by weight as another example, based on 100 parts by weight of the solvent-free UV curable coating composition. When the amount of the alicyclic (meth)acrylate monomer having 2 or less functional groups falls under the range stated above, the coating may exhibit improved workability, and the strength, heat resistance and appearance of the coating may be promoted.

According to an embodiment of the present invention, a total amount of the (meth)acrylate monomer having 2 or less functional groups (a monofunctional (meth)acrylate monomer having a hydroxyl group and an alicyclic (meth)acrylate monomer having 2 or less functional groups) may be in the range of 35 parts to 60 parts by weight, based on 100 parts by weight of all of the acrylate monomers (the (meth)acrylate monomers having 3 or more functional groups, the monofunctional (meth)acrylate monomer having a hydroxyl group and the alicyclic (meth)acrylate monomer having 2 or less functional groups).

According to an embodiment of the present invention, the (meth)acrylate monomer having 3 or more functional groups, the monofunctional (meth)acrylate monomer having a hydroxyl group and the alicyclic (meth)acrylate monomer having 2 or less functional groups are used in an amount ratio of 1.5 to 4 : 0.5 to 2 : 1 by weight.

### Photopolymerization initiator

In the solvent-free UV curable coating composition according to the present invention, the photopolymerization initiator is excited by UV light etc. to function to initiate photopolymerization and general photopolymerization initiators useful in the related art can be used without limitation.

Non-limiting examples of the photopolymerization initiators include Irgacure 184, Irgacure 369, Irgacure 651, Irgacure 819, Irgacure 907, benzionalkylether, benzophenone, benzyl dimethyl katal, hydroxycyclohexyl phenylacetone, chloroacetophenone, 1,1-dichloro acetophenone, diethoxy acetophenone, hydroxy acetophenone, 2-chloro thioxanthone, 2-ETAQ (2-ethyl anthraquinone), 1-hydroxy-cyclohexyl-phenyl-ketone, 2-hydroxy-2-methyl-1-phenyl-1-propanone, 2-hydroxy-1-[4-(2-hydroxyethoxy)phenyl]-2-methyl-1-propanone, methylbenzoylformate, and so on. These photopolymerization initiators can be used alone or in combination thereof.

According to an embodiment of the present invention, a short-wavelength photopolymerization initiator capable of absorbing light having wavelengths of 300 nm or less, a long-wavelength photopolymerization initiator capable of absorbing light having wavelengths of greater than 300 nm, or a combination thereof may be used as the photopolymerization initiator. According to another embodiment of the present invention, an initiator capable of absorbing light having wavelengths in the range of 230 nm to 340 nm may be used as the photopolymerization initiator.

The amount of the photopolymerization initiator may be in the range of 5 parts to 10 parts by weight as an example, and 5 parts to 8 parts by weight as another example, based on 100 parts by weight of the solvent-free UV curable coating composition. When the amount of the photopolymerization initiator is in the range stated above, the photopolymerization may be sufficiently carried out without degrading properties of the coating.

### Additives

In addition to the aforementioned components, the solvent-free UV curable coating composition according to the present invention may further comprise additives generally known in the related art unless advantages and effects of the present invention are compromised. Here, the amounts of the additives can be appropriately adjusted within the ranges known in the related art.

### Adhesion promoter

The solvent-free UV curable coating composition according to the present invention may further comprise an adhesion promoter, when necessary. The adhesion promoter, which is used in the composition in an appropriate amount, can improve adhesion of the UV curable composition and can prevent silver oxidation.

As the adhesion promoter, a phosphate adhesion promoter may be used. As an example, the phosphate adhesion promoter may have a number-average molecular weight in the range from 500 to 1,000 and has an oxide group, a hydroxy oxide group and/or a trifunctional acid ester group to improve adhesion between the coating and a substrate surface. As an example, a hydroxy/carboxy-functional phosphate ester may be used.

The amount of the adhesion promoter may be appropriately controlled within the range known in the related art. As an example, the amount of the adhesion promoter may be in the range of 2 parts to 5 parts by weight based on 100 parts by weight of the solvent-free UV curable coating composition. When the amount of the adhesion promoter falls under the range stated above, a desired adhesion improving effect can be attained without generating hazes on the coating.

### Leveling agent

The solvent-free UV curable coating composition according to the present invention may further comprise a leveling agent, when necessary. The leveling agent can increase adhesive force of the composition by leveling a coating surface for achieving evenness and smoothness when coated with the composition.

A leveling agent that is generally known in the related art may be used without limitation. As an example, an acryl- or silicon-based leveling agent may be used alone or in combination thereof. For example, polyether modified polydimethylsiloxane may be used, and may include a (meth)acryloyl group added to the polyether chain. Here, the siloxane-based compound may offer a wetting property.

The amount of the leveling agent can be appropriately adjusted within the range generally known in the related art. As an example, the amount of the leveling agent may be in a range of 0.5 to 1 part by weight, based on 100 parts by weight of the solvent-free UV curable coating composition according to the present invention. When the amount of the leveling agent falls under the range stated above, desired adhesion of the coating and an adhesive force improving effect can be attained.

### Other additives

In addition to the aforementioned components, the solvent-free UV curable coating composition according to the present invention may further include additives generally known in the related art without limitation unless advantages and effects of the present invention are compromised. Here, the amounts of the additives can be appropriately adjusted within the ranges known in the related art.

Examples of usable additives include an UV absorbent (e.g., triazine-based UV absorbent), a UV stabilizer (e.g., HALS), an antioxidant (e.g., a phenol-based antioxidant), a lubricant, a surface modifier, a surfactant, a defoamer (e.g., dimethylpolysiloxane), a slip agent, a solvent, a wetting agent, a stain repellent, a softener, a thickener, a weather resisting additive, a drying agent, an appearance modifier, a leveling agent, a polymer, and so on. These additives may be used alone or in combination thereof.

The manufacturing method of the solvent-free UV curable coating composition according to the present invention is not particularly limited. For example, the solvent-free UV curable coating composition according to the present invention may be manufactured by a general method comprising inputting the urethane (meth)acrylate oligomer having 4 or more functional groups, the (meth)acrylate monomer having 3 or more functional groups, the monofunctional (meth)acrylate monomer having a hydroxyl group, the alicyclic (meth)acrylate monomer having 2 or less functional groups and the photopolymerization initiator, when necessary, together with known additives, into mixer equipment, such as a dissolver or a stirrer, followed by mixing at an appropriate temperature (e.g., room temperature).

The solvent-free UV curable coating composition according to the present invention comprising the aforementioned components may have a viscosity of 50 to 300 cps, and 60 to 200 cps as another example, at 25°C. Accordingly, even if organic solvents are not used, the solvent-free UV curable coating composition according to the present invention has appropriate flowability, thereby enabling spray coating.

The solvent-free UV curable coating composition according to the present invention can be applied for the purpose of coating a component of a headlamp, for example, a lens or a reflector of a headlamp. However, the use of the solvent-free UV curable coating composition according to the present invention is not particularly limited, and can be applied to a variety of processing steps or uses.

### <Headlamp>

The present invention provides automotive headlamp, for example, a lens or a reflector for an automotive, comprising a cured coating layer made by curing the solvent-free UV curable coating composition. The headlamp comprises a substrate and the cured coating layer located on one or both surfaces of the substrate and made from the solvent-free UV curable coating composition.

As the substrate, a base material generally used in headlamp fields can be used without limitation. Examples of the base material may include a metallic material, such as iron, aluminum or magnesium, a plastic base material, such as an engineering plastic, a thermoplastic plastic or a thermoset plastic.

Non-limiting examples of usable plastic base material include polyphenyl sulfide, polymethylmethacrylate (PMMA), polyethyleneterephthate (PET), polyethylenenaphthalene (PEN), triacetylcellulose (TAC), polycarbonate (PC), polyimide (PI), polyethylene (PE), polypropylene (PP), polyether sulfone (PES), polyvinyl alcohol(PVA), polyvinylchloride (PVC) or a combination of 2 or more thereof. As another example, the base material may be prepared by injection-molding of a bulk molding compound (BMC) including an unsaturated polyester resin with a glass fiber, a weight balancing material, a low shrinkage material and a release agent added thereto. When the aforementioned base material is used for the substrate, the substrate may have excellent initial adhesion and high-temperature adhesion to the solvent-free UV curable coating composition according to the present invention.

The coating layer comprising the solvent-free UV curable coating composition may have variable thicknesses that can be adjusted in various manners according to use purposes. The cured coating layer may have a thickness in the range of 5 µm to 25 µm as an example, and 5 µm to 20 µm as another example. When the thickness is in the range stated above, the coating layer may have excellent adhesion to the substrate surface without demonstrating poor appearance.

According to an embodiment of the present invention, the solvent-free UV curable coating composition is applied to a surface of a substrate and then dried, followed by being cured by UV radiation, thereby forming the cured coating layer. As the method of applying the solvent-free UV curable coating composition to the substrate, a coating method generally used in the related art, for example, spray coating, brushing, deep coating, spin coating, roll coating, flow coating, air coating, and so on, may be employed. In a spray coating, solvent-type coatings are generally used. However, the low-viscosity solvent-free coating may be used in spray coating. The amount of the UV radiation is not particularly limited, and may be in the range of, for example, 500 to 3,000 mJ/cm².

The substrate having the aforementioned cured coating layer may be an automotive headlamp, for example, a lens or a reflector of the headlamp having the cured coating layer formed on its surface. The headlamp demonstrates excellent adhesion to a plastic substrate (made of, for example, BMC) and a metal deposition film (e.g., an aluminum deposition film), and is good in view of the overall properties of coating, including appearance, heat resistance, moisture resistance, cold-heat resistance, and so on.

The present invention will be described in more detail with reference to examples and comparative examples, and the following examples and comparative examples are provided only for illustrating the present invention, not for limiting the protection scope of the present invention.

### Examples 1 - 9

Solvent-free UV curable coating compositions of Examples 1-9 were prepared according to amount listed in Table 1, in which the respective compositions are used in amounts indicated by parts by weight.

### Comparative Examples 1-8

UV curable coating compositions of Comparative Examples 1-8 were prepared according to the amount listed in Table 1.

**Table 1**

| | A | | B | C | | D | E | F | G |
|---|---|---|---|---|---|---|---|---|---|
| | A-1 | A-2 | | C-1 | C-2 | | | | |
| Example 1 | 20 | - | 40 | 15 | - | 15 | 7 | 2 | 1 |
| Example 2 | 15 | - | 40 | 20 | - | 15 | 7 | 2 | 1 |
| Example 3 | 10 | - | 40 | 25 | - | 15 | 7 | 2 | 1 |
| Example 4 | 11 | - | 50 | 17 | - | 14 | 5 | 2 | 1 |
| Example 5 | 15 | - | 35 | 22 | - | 18 | 7 | 2 | 1 |
| Example 6 | 15 | - | 38 | 17 | - | 20 | 7 | 2 | 1 |
| Example 7 | 15 | - | 41 | 22 | - | 12 | 7 | 2 | 1 |
| Example 8 | 15 | - | 40 | 20 | - | 17 | 5 | 2 | 1 |
| Example 9 | 15 | - | 40 | 20 | - | 12 | 10 | 2 | 1 |
| Comparative Example 1 | - | 20 | 40 | 15 | - | 15 | 7 | 2 | 1 |
| Comparative Example 2 | 20 | - | 40 | - | 15 | 15 | 7 | 2 | 1 |
| Comparative Example 3 | 10 | - | 57 | 9 | - | 14 | 7 | 2 | 1 |
| Comparative Example 4 | 10 | - | 30 | 22 | - | 28 | 7 | 2 | 1 |
| Comparative Example 5 | 10 | - | 27 | 25 | - | 30 | 5 | 2 | 1 |
| Comparative Example 6 | 10 | - | 22 | 25 | - | 30 | 10 | 2 | 1 |
| Comparative Example 7 | 10 | - | 37 | 20 | - | 15 | 15 | 2 | 1 |
| Comparative Example 8 | 12 | - | 55 | 15 | - | 10 | 5 | 2 | 1 |

| | | | | | | | | | |
|---|---|---|---|---|---|---|---|---|---|
| A-1: Urethane acrylate oligomer having 6 functional groups (Mw: 1,800; viscosity: 2,000 cps; trade name: CN968NS) A-2: Aliphatic urethane acrylate oligomer having 2 functional groups (trade name: Miramer PU2100) B: Pentaerytritol triacrylate (PETA) (Mw: 298; viscosity: 1,000-1,800 cps) C-1: 2-hydroxyethylmethacrylate (HEMA) (Mw: 131; viscosity: 7-10 cps) C-2: Hexamethylenediacrylate(HDDA) (Mw: 226.27; viscosity: 12 cps) D: Tricyclodecanedimethanol diacrylate(TCDDA) (Mw: 305; viscosity: 130 cps) E: photopolymerization initiator (2-Hydroxy-2-methyl-1-phenyl-1-propanone; trade name: IRGACURE 184) F: phosphate adhesion promoter (Bis(2-methacryloxyethyl) phosphate) G: leveling agent (BYK 310) | | | | | | | | | |

### Experimental Example: Evaluation of properties of UV curable coating compositions for automotive headlamp

Each of the solvent-free UV curable coating compositions prepared in Examples 1-9 and Comparative Examples 1-8 was coated on a BMC test piece (trade name: KPI SN203) by an air spray process to a thickness of about 12 µm (based on a dried coating thickness of top layer), dried at a temperature of 80°C for about 300 seconds, and cured using UV curing machine to yield a hard coating test piece. To evaluate various properties of coatings, the following items of the test piece were determined. The results are shown in Table 3. The UV curing tests were carried out under conditions of 2,500 mj/cm² in UV energy and 300 mW/cm² in UV intensity. The properties of the cured products were evaluated according to the methods indicated in Table 2.

**Table 2**

| Item | Evaluation method |
|---|---|
| Appearance | Evaluation was carried out to identify noticeable defects observed with the naked eye, including discoloration, gloss degradation, sagging, orange peel, and so on. |
| Adhesion | A cross cut tape test was conducted in accordance with ASTM D3359. |
| Heat resistance | After each test piece was left under the condition of test temperature (200±2°C) for 96 hours and then left at room temperature for one hour, a visually noticeable color change, tarnishing, swelling, cracks, gloss degradation were observed, and the adhesion were evaluated. |
| Moisture resistance | After each test piece was left under the conditions of test temperature (50±2°C) and relative humidity (98±2%) for 240 hours and then left at room temperature for one hour, a visually noticeable color change, tarnishing, swelling, cracks, gloss degradation were observed, and the adhesion was evaluated. |
| Cold-heat resistance cycle test | After each test piece was left under the conditions of test temperature (80±2° C) and relative humidity (95%) for 4 hours and then left under the temperature (-40±2°C) and relative humidity (95%) conditions for 4 hours, this procedure was repeated 5 times and the resultant test piece was left at room temperature for one hour. Then, tarnishing, discoloration, swelling, cracks, gloss degradation of each test piece were observed, and the adhesion was evaluated. |
| Evaluation criteria | Good: ○, Average: Δ, Poor: X |

**Table 3**

| Test item | Appearance | Adhesion | Heat resistance | Moisture resistance | Cold-heat resistance |
|---|---|---|---|---|---|
| Example 1 | ○ | ○ | ○ | ○ | ○ |
| Example 2 | ○ | ○ | ○ | ○ | ○ |
| Example 3 | ○ | ○ | ○ | ○ | ○ |
| Example 4 | ○ | ○ | ○ | ○ | ○ |
| Example 5 | ○ | ○ | ○ | ○ | ○ |
| Example 6 | ○ | ○ | ○ | ○ | ○ |
| Example 7 | ○ | ○ | ○ | ○ | ○ |
| Example 8 | ○ | ○ | ○ | ○ | ○ |
| Example 9 | ○ | ○ | ○ | ○ | ○ |
| Comparative Example 1 | ○ | Δ | X | ○ | Δ |
| Comparative Example 2 | ○ | Δ | ○ | ○ | ○ |
| Comparative Example 3 | Δ | Δ | Δ | ○ | Δ |
| Comparative Example 4 | ○ | ○ | Δ | ○ | Δ |
| Comparative Example 5 | X | ○ | X | X | X |
| Comparative Example 6 | ○ | ○ | X | Δ | X |
| Comparative Example 7 | ○ | X | Δ | ○ | Δ |
| Comparative Example 8 | Δ | Δ | Δ | Δ | Δ |

As confirmed from the evaluation results, the solvent-free UV curable coating compositions prepared in Examples 1-9, each comprising an acrylate oligomer having 4 or more functional groups, an acrylate monomer having 3 or more functional groups, a monofunctional acrylate monomer having a hydroxyl group, an alicyclic acrylate monomer having 2 or less functional groups, a photopolymerization initiator, and other additives (e.g., a phosphate adhesion promoter, a leveling agent), in given amount ratios, had improved gloss in appearance and good initial adhesion to a coating layer. In addition, peeling or swelling did not occur to the coating even at a high temperature of 200°C or higher, suggesting that the coating has excellent heat resistance, moisture resistance and cold-heat resistance.

However, in Comparative Examples 1 and 2 in which a urethane acrylate oligomer having 4 or more functional groups and a monofunctional acrylate monomer having a hydroxyl group were not used, respectively, the coating compositions showed unsatisfactory results in terms of one or more of adhesion, heat resistance and cold-heat resistance.

The composition of Comparative Example 3 was prepared using a relatively large amount of an acrylate monomer (B) having 3 or more functional groups and a relatively small amount of a monofunctional acrylate monomer (C) having a hydroxyl group, based on the total amount of the coating composition. The composition of Comparative Example 3 had an increased viscosity, lowering the leveling property in appearance, and the coating was fragile and cracky. In addition, the adhesion of the coating was lowered at an initial stage and after the heat resistance test. Further, cracks were generated after the cold-heat resistance test. In Comparative Examples 4-6, the acrylate monomer (B) having 3 or more functional groups was used in a relatively small amount, and the alicyclic acrylate monomer (D) having 2 or less functional groups was used in an excessive amount, based on the total amount of the coating composition. Among the measured properties, two or more properties showed unsatisfactory results. The composition of Comparative Example 7 comprises an excess of a photopolymerization initiator, and the coating was fragile and cracky. In addition, the adhesion of the coating was lowered at an initial stage, and the appearance and adhesion of the coating were degraded after the heat resistance test and the cold-heat resistance test. The results confirmed that poor properties were demonstrated when the amount ratios of the respective components in the composition according to the present invention were not fulfilled.

In Comparative Example 8, a total amount of the (meth)acrylate monomers having 2 or less functional groups (components (C) and (D)) is 31.25 parts by weight, based on 100 parts by weight of all of the acrylate monomers (components (B), (C) and (D)), and the (meth)acrylate monomer having 3 or more functional groups(B), the monofunctional (meth)acrylate monomer (C) having a hydroxyl group and the alicyclic (meth)acrylate monomer (D) having 2 or less functional groups were used in an amount ratio of 5.5:1.5:1. The results confirmed that poor properties were demonstrated when the amount ratios of the respective components of the composition according to the present invention, that is, (C+D)/(B+C+D) and B:C:D, were not fulfilled.

As described above, it was confirmed that the solvent-free UV curable coating composition according to the present invention and the base material for use in a substrate as an automobile part employing the coating composition demonstrate good properties including appearance, initial adhesion, heat resistance, moisture resistance and cold-heat resistance. In addition, since the VOC content is minimized owing to non-use of organic solvents, the solvent-free UV curable coating composition and the substrate employing the composition turned out to be environmentally friendly.

### [INDUSTRIAL APPLICABILITY]

The present invention provides a solvent-free UV curable coating composition, which can be employed to a conventional air spray coating process as it is, thereby increasing the manufacturability. In addition, the solvent-free UV curable coating composition according to the present invention can demonstrate substantially the same coating properties as the conventional coating using a solvent, in terms of high-temperature adhesion, appearance characteristics, initial adhesion, heat resistance, moisture resistance and heat-cold resistance.

In addition, since volatile organic solvents are not used in the solvent-free UV curable coating composition according to the present invention, problems of harmful effects and environmental contamination, caused due to the use of the volatile organic solvents, can be solved. In addition, since demand for manufacturing equipments and processes required for solvent volatilization is eliminated, the manufacturability and economic efficiency can be increased.

Moreover, the solvent-free UV curable coating composition according to the present invention can satisfy not only the domestic VOC-related environmental restrictions governed by the Ministry of Environment of Korea but also international environmental restrictions of foreign countries including China, India, and so on, which are becoming stricter. In addition, the solvent-free UV curable coating composition according to the present invention can minimize the costs associated with use and management of existing environmental equipments.

## Claims

1. A solvent-free UV curable coating composition comprising:
10 to 20 parts by weight of urethane (meth)acrylate oligomer having 4 or more functional groups;
35 to 55 parts by weight of (meth)acrylate monomer having 3 or more functional groups;
15 to 25 parts by weight of monofunctional (meth)acrylate monomer having a hydroxyl group;
10 to 20 parts by weight of alicyclic (meth)acrylate monomer having 2 or less functional groups; and
5 to 10 parts by weight of a photopolymerization initiator, based on 100 parts by weight of the composition.

2. The solvent-free UV curable coating composition of claim 1, wherein the urethane (meth)acrylate oligomer having 4 or more functional groups has a weight-average molecular weight (Mw) in the range of 1,000 to 2,500 g/mol, and a viscosity of 2,500 cps or less at 25°C.

3. The solvent-free UV curable coating composition of claim 1, wherein the (meth)acrylate monomer having 3 or more functional groups has a viscosity of 2,000 cps or less at 25°C.

4. The solvent-free UV curable coating composition of claim 1, wherein the monofunctional (meth)acrylate monomer having a hydroxyl group has a viscosity of 30 cps or less at 25°C, and the alicyclic (meth)acrylate monomer having 2 or less functional groups has a viscosity of 150 cps or less at 25°C.

5. The solvent-free UV curable coating composition of claim 1, wherein a total amount of the monofunctional (meth)acrylate monomer having a hydroxyl group and the alicyclic (meth)acrylate monomer having 2 or less functional groups is in the range of 35 parts to 60 parts by weight, based on 100 parts by weight of all of the (meth)acrylate monomers.

6. The solvent-free UV curable coating composition of claim 1, wherein the photopolymerization initiator is an initiator capable of absorbing UV light having wavelengths in the range of 230 nm to 340 nm.

7. The solvent-free UV curable coating composition of claim 1, further comprising 0.5 to 6 parts by weight of one or more additives, based on 100 parts by weight of the composition.

8. A headlamp comprising:
a substrate; and
a cured coating layer located on one or both surfaces of the substrate and made from the UV curable coating composition as set forth in one of claims 1 to 7.
